# EUROPEAN PATENT APPLICATION

(11) **EP 4 186 604 A1**
(43) Date of publication of application: **31.05.2023**
(21) Application number: 21847060.7
(22) Date of filing: 12.07.2021
(51) Int. Cl.: B09B 3/00, C22B 7/00, F27D 11/04, F27D 11/08, C22B 15/00, C22B 23/02, H01M 10/54, C22B 9/20

(54) **METHOD FOR RECOVERING VALUABLE METAL**

(30) Priority: 21.07.2020 JP 2020124672; 21.07.2020 JP 2020124673
(71) Applicant: SUMITOMO METAL MINING CO., LTD., Tokyo 105-8716 (JP)
(72) Inventor: MAEBA Kazunari, Niihama-shi, Ehime 792-0002 (JP); YAMASHITA Yu, Niihama-shi, Ehime 792-0002 (JP); NAGAKURA Toshihiko, Niihama-shi, Ehime 792-0002 (JP); TAKAHASHI Junichi, Niihama-shi, Ehime 792-0002 (JP); TOGASHI Ryo, Niihama-shi, Ehime 792-0002 (JP)
(74) Representative: Jones, Nicholas Andrew
(86) International application number: PCT/JP2021/026190
(87) International publication number: WO 2022/019172

(57) **Abstract**

Provided is a method that allows for efficient removal of an impurity metal, and further, the recovery of a valuable metal with high efficiency while suppressing the erosion of a refractory material of a furnace, in recovering a valuable metal from a valuable-metal-containing charge in a pyrometallurgy process. The method for recovering a valuable metal (Cu, Ni, and Co) includes the steps of: preparing a charge comprising at least a valuable metal as a raw material; heating and melting the raw material to form an alloy and a slag; and separating the slag to recover the alloy containing the valuable metal, wherein the heating and melting of the raw material comprises charging the raw material into a furnace of an electric furnace equipped with an electrode therein, and further melting the raw material by means of Joule heat generated by applying an electric current to the electrode, or heat generation of an arc itself, and thereby separating the raw material into a molten alloy and a molten slag present over the alloy.

## Description

### TECHNICAL FIELD

The present invention relates to a method for recovering a valuable metal.

### BACKGROUND ART

In recent years, lithium ion batteries are in widespread use as a lightweight and high-power battery. Well-known lithium ion batteries have a structure in which a negative electrode material, a positive electrode material, a separator, and an electrolyte solution are encapsulated in an outer case.

In this regard, the outer case is made from a metal such as iron (Fe) and aluminum (Al). The negative electrode material comprises a negative electrode active material (graphite, etc.) bonded to a negative electrode current collector (a copper foil, etc.). The positive electrode material comprises a positive electrode active material (lithium nickelate, lithium cobaltate, etc.) bonded to a positive electrode current collector (an aluminum foil, etc.). The separator comprises, for example, a porous polypropylene resin film. The electrolyte solution comprises an electrolyte such as lithium hexafluorophosphate (LiPF₆).

One of the major applications of the lithium ion batteries is hybrid motor vehicles and electric motor vehicles. Thus, a huge number of lithium ion batteries now installed in the motor vehicles are expected to be discarded in the future according to the life cycle of the motor vehicles. In addition, there exist lithium ion batteries which are discarded as a defective product in the production process. Recycling of such spent batteries and the defective batteries generated in the production process (hereinafter, "discarded lithium ion battery") as a resource is needed.

A pyrometallurgy process involving entirely fusing the discarded lithium ion batteries in a high temperature furnace (melting furnace) has been conventionally proposed as a procedure for the recycling. The pyrometallurgy process includes melting crushed discarded lithium ion batteries, and separating and recovering a valuable metal typified by cobalt (Co), nickel (Ni) and copper (Cu), which is a target for recovery, from a low-value-added metal typified by iron (Fe) and aluminum (Al) by utilizing the difference in oxygen affinity therebetween. In this procedure, the low-value-added metal is oxidized as much as possible to form a slag, whereas the valuable metal is inhibited from oxidation as much as possible and recovered as an alloy.

For example, Patent Document 1 discloses such a pyrometallurgy process. Specifically, a process for recovering cobalt from a lithium ion battery also containing aluminum and carbon is disclosed, which includes the steps of: providing a bath furnace equipped with means for oxygen injection; providing a metallurgical charge containing lithium ion batteries, and slag formers, said slag formers comprising CaO; feeding the metallurgical charge to the furnace while injecting oxygen, whereby at least part of the cobalt is reduced and collected in a metallic phase; and separating the slag from the metallic phase by tapping (claim 1 in Patent Document 1).
Patent Document 1: Japanese Patent No. 5818798

### DISCLOSURE OF THE INVENTION

### Problems to be Solved by the Invention

Incidentally, discarded lithium ion batteries contain various components, and some of the components have a high melting point. Therefore, the melting of the discarded lithium ion batteries requires a treatment at a high temperature, for example, at a temperature of 1,400°C or higher.

Further, the control of the degree of oxidation and reduction in the melting treatment is important for efficient recovery of the valuable metal. For example, such a discarded lithium ion battery contains a large amount of impurities such as carbon (C), aluminum (Al), fluorine (F) and phosphorus (P). In regard to these elements, excess residual carbon (C) inhibits the oxidation and removal of other impurities, since carbon (C) functions as a reductant. Additionally, the excess residual carbon hinders the separation of the alloy (metal) and the slag. Furthermore, phosphorus (P) is reduced relatively easily. This causes a decrease in the recovery ratio of the valuable metal in the absence of strict control of the degree of oxidation and reduction. More specifically, when the degree of reduction is excessively high, phosphorus is not oxidized or removed, and is incorporated into the metal together with the valuable metal(s). On the other hand, when the degree of reduction is excessively low, the valuable metal is also oxidized, which renders the recovery of the valuable metal as the alloy (metal) unsuccessful.

Under such circumstances, conventional melting treatments of the discarded lithium ion batteries have employed an induction furnace (inductive heating furnace), in particular an indirect heating induction furnace, which can be maintained at high temperatures and easily controls the degree of oxidation and reduction.

The induction furnace is a heating furnace utilizing electromagnetic induction, and includes a coil and a crucible provided inside the coil. When an alternating current is applied to the coil, an alternating current magnetic field is generated, and the alternating current magnetic field generates an induced current in the crucible or a treatment object contained therein. The crucible or the treatment object is heated by means of Joule heat of the induced current. In the case of the melting treatment of the discarded lithium ion batteries, a double crucible that includes a graphite crucible and an oxide-based crucible therein is used, and the discarded lithium ion batteries are charged into the oxide-based crucible. The application of an electric current to the coil causes the graphite crucible to be inductively heated, and the generated heat is transferred to the discarded lithium ion batteries through the oxide-based crucible. Since the induction furnace utilizes an external heating mode based on inductive heating, no graphite electrode is necessary inside the crucible. Thus, contamination with carbon can be suppressed as much as possible. Further, the induction furnace permits heating under a relatively closed atmosphere, and allows for the adjustment of an atmospheric gas component and the pressure thereof and hence the control of the degree of oxidation and reduction.

However, the melting treatment using the induction furnace has a disadvantage. Specifically, for melting a charge containing a valuable metal, such as the discarded lithium ion batteries, the charge has to be maintained at a high temperature, for example, at a temperature of 1,400°C or higher. The induction furnace utilizes an external heating mode, which causes a loss of the transferred heat. In order to maintain the charge at the melting temperature thereof (for example, 1,400°C or higher), the temperature of a refractory material (oxide-based crucible) containing the charge has to be increased to the melting temperature or higher, specifically 1,500°C or higher, and held at that temperature. However, the erosive wear of the refractory material by the slag is severe at such a high temperature, and the suppression of the erosion of the refractory material is difficult, which leads to a problem of shortening of the lifetime of the refractory material (crucible).

The present inventors conducted extensive studies in view of such circumstances. Consequently, the present inventors found that the erosion of the refractory material can be significantly suppressed as compared with the case of using the induction furnace, by employing an electric furnace equipped with an electrode therein as a melting furnace, and melting the charge (discarded lithium ion batteries, etc.) by means of Joule heat or the heat generation of the arc itself. Additionally, it was confirmed that the use of a graphite electrode as an electrode causes no problem when the degree of oxidation and reduction is controlled accounting for an input from the electrode. It was then found that such a process allows for the recovery of the valuable metal such as cobalt at a high recovery ratio, and efficient removal of impurities such as phosphorus and manganese.

The present invention was completed based on such findings, and it is an object of the present invention to provide a method that allows for efficient removal of an impurity metal such as phosphorus (P), and further, the recovery of a valuable metals such as copper (Cu), nickel (Ni) or cobalt (Co) with high efficiency while suppressing the erosion of a refractory material of a furnace, in recovering a valuable metal from a charge containing valuable metals, such as discarded lithium ion batteries in a pyrometallurgy process.

### Means for Solving the Problems

The present invention encompasses the following first to ninth aspects. It should be noted that in the present description, any numerical range specified using "to" refers to a range including the upper and lower limits of the range. In other words, the expression "X to Y" has the same meaning as "X or more and Y or less".

A first aspect of the present invention provides a method for recovering a valuable metal, comprising the steps of: preparing a charge comprising at least a valuable metal as a raw material; heating and melting the raw material to form an alloy and a slag; and separating the slag to recover the alloy comprising the valuable metal, wherein the heating and melting of the raw material comprises charging the raw material into a furnace of an electric furnace equipped with an electrode therein, and further melting the raw material by means of Joule heat generated by applying an electric current to the electrode, or heat generation of an arc itself, and thereby separating the raw material into a molten alloy and a molten slag present over the alloy.

A second aspect of the present invention provides the method according to the first aspect, wherein the electric furnace comprises a furnace wall, and cooling means for cooling the furnace wall.

A third aspect of the present invention provides the method according to the first or second aspect, wherein the electrode is arranged such that in the heating and melting of the raw material, the tip of the electrode is not in contact with the alloy formed.

A fourth aspect of the present invention provides the method according to any one of the first to third aspects, wherein the heating and melting of the raw material comprises overlaying a metal sheet on the surface of the raw material.

A fifth aspect of the present invention provides the method according to the first aspect, wherein the electric furnace is a submerged arc furnace, and the heating and melting of the raw material comprises applying the electric current to the electrode to melt the raw material, with the tip of the electrode being immersed in the slag formed.

A sixth aspect of the present invention provides the method according to the fifth aspect, wherein the heating and melting of the raw material comprises further charging an additional raw material over the slag formed to form a covering layer comprising the additional raw material.

A seventh aspect of the present invention provides the method according to the fifth or sixth aspect, wherein the immersion depth of the electrode into the slag is adjusted according to the melting point of the alloy.

An eighth aspect of the present invention provides the method according to any one of the fifth to seventh aspects, wherein the electrode is a graphite electrode.

A ninth aspect of the present invention provides the method according to any one of the fifth to eighth aspects, wherein the submerged arc furnace comprises a furnace wall, and cooling means for cooling the furnace wall.

A tenth aspect of the present invention provides the method according to any one of the first to ninth aspects, wherein the heating and melting of the raw material comprises introducing a reductant to the raw material.

An eleventh aspect of the present invention provides the method according to any one of the first to tenth aspects, wherein the heating and melting of the raw material comprises introducing a flux to the raw material.

A twelfth aspect of the present invention provides the method according to any one of the first to eleventh aspects, further comprising preliminarily heating the raw material to decrease the amount of carbon contained in the raw material before heating and melting the raw material.

A thirteenth aspect of the present invention provides the method according to any one of the first to twelfth aspects, wherein the valuable metal comprises at least one metal selected from the group consisting of copper (Cu), nickel (Ni), cobalt (Co) and a combination thereof, or an alloy comprising at least one metal selected from the group consisting of copper (Cu), nickel (Ni), cobalt (Co) and a combination thereof.

A fourteenth aspect of the present invention provides the method according to any one of the first to thirteenth aspects, wherein the charge comprises a discarded lithium ion battery.

### Effects of the Invention

The present invention provides a method that allows for efficient removal of an impurity metal, and further, the recovery of a valuable metal with high efficiency while suppressing the erosion of a refractory material of a furnace, in recovering a valuable metal from a valuable-metal-containing charge in a pyrometallurgy process.

### BRIEF DESCRIPTION OF THE DRAWINGS

FIG. 1 is a diagram schematically showing a cross section of an electric resistance type melting furnace;
FIG. 2 is a diagram schematically showing a cross section of a submerged arc furnace; and
FIG. 3 is a flowchart showing an example of a flow of a method for recovering a valuable metal from a discarded lithium ion battery. An example of a recovery method of a valuable metal is shown.

### PREFERRED MODE FOR CARRYING OUT THE INVENTION

Hereinafter, a specific embodiment of the present invention (hereinafter, referred to as "present embodiment") will be described. It should be noted that the present invention is not limited to the following embodiments, and various modifications are possible without departing from the spirit of the present invention.

### <<1. Recovery Method of Valuable Metal>>

A method for recovering a valuable metal according to the present embodiment includes the steps of: preparing a charge containing at least a valuable metal as a raw material (preparation step); heating and melting the prepared raw material to form an alloy and a slag (melting step); and separating the obtained slag to recover the alloy containing the valuable metal (slag separation step). In addition, in the heating and melting of the raw material, the raw material is charged into a furnace of an electric furnace equipped with an electrode therein. Furthermore, the raw material is melted by means of Joule heat generated by applying an electric current to the electrode or the heat generation of the arc itself, thereby to separate the raw material into a molten alloy and a molten slag present over the alloy.

The method according to the present embodiment is for recovering a valuable metal from a charge containing at least the valuable metal. The valuable metal is a target for the recovery, and is, for example, at least one metal selected from the group consisting of copper (Cu), nickel (Ni), cobalt (Co) and a combination thereof, or an alloy containing at least one metal selected from the group consisting of copper (Cu), nickel (Ni), cobalt (Co) and a combination thereof.

The method according to the present embodiment is a recovery method principally through a pyrometallurgy process. The method is, however, not limited to an embodiment which involves the pyrometallurgy process alone, and the method may involve the pyrometallurgy process and a hydrometallurgy process. Each step will be described in detail below.

### [Preparation Step]

In the preparation step, a charge is prepared to obtain a raw material. The charge is a target for the treatment for the recovery of a valuable metal, and contains, for example, at least one valuable metal selected from the group consisting of copper (Cu), nickel (Ni), cobalt (Co) and a combination thereof. The charge may contain the valuable metal component in the form of a metal or an alloy, or in the form of a compound such as an oxide. Further, the charge may contain an inorganic or organic component other than the valuable metal component mentioned above.

The source of the charge is not limited so long as the charge contains the valuable metal. Examples of the charge include a discarded lithium ion battery, as well as an electronic component or device that contains a dielectric or magnetic material. In addition, the form of the charge is not limited so long as it is suitable for the treatments in the subsequent steps. For example, in the preparation step, the charge may be subjected to a treatment such as a crushing treatment to achieve a suitable form for the treatments. Furthermore, in the preparation step, the charge may be subjected to a treatment such as a thermal treatment and/or a fractionation treatment to remove unwanted components such as moisture and organic matter.

### [Melting Step]

### (Regarding Melting Treatment)

In the melting step, the raw material is heated and melted (reductively melted), to separate the raw material into an alloy (metal) and a slag. Specifically, the raw material is heated and melted to form a molten body. The molten body contains a molten alloy (molten alloy) and a molten slag (molten slag). Since the molten slag and the molten alloy differ in specific gravity from each other, these are contained in the molten body in a separated state.

In addition, the alloy principally contains the valuable metal. Thus, the valuable metal and other components can be separated as the alloy and the slag, respectively. This arises from the fact that the low-value-added component (Al, etc.) has high oxygen affinity, whereas the valuable metal has low oxygen affinity. For example, aluminum (Al), lithium (Li), carbon (C), manganese (Mn), phosphorus (P), iron (Fe), cobalt (Co), nickel (Ni) and copper (Cu) are generally oxidized more easily in the order of: Al> Li> C> Mn> P> Fe> Co> Ni> Cu. In other words, aluminum (Al) is oxidized most easily, and copper (Cu) is most resistant to oxidation. Thus, the low-value-added component (Al, etc.) is easily oxidized to form a slag, whereas the valuable metal (for example, Cu, Ni, and Co) is reduced to form a metal (alloy). In this way, the valuable metal and the low-value-added component can be efficiently separated into the alloy and the slag.

In the method according to the present embodiment, in the heating and melting of the raw material, an electric furnace equipped with an electrode therein is used as a melting furnace, and the raw material is charged into a furnace of the electric furnace. Then, the raw material is melted by means of Joule heat generated by applying an electric current to the electrode or the heat generation of the arc itself. The molten raw material (molten body) is separated into a molten alloy and a molten slag through such a melting treatment. During this treatment, the molten alloy and the molten slag are separated such that the molten alloy is localized in the bottom part and the molten slag is localized in the upper part due to the difference in specific gravity.

As described above, the melting treatment of the raw material is performed by an internal heating mode where the raw material is heated using the electrode provided in the electric furnace. In the internal heating mode, the molten body (molten raw material) located in the vicinity of the electrode reaches the highest temperature. Accordingly, a furnace wall can be maintained at a lower temperature than the molten body, and as a result, the erosion of a refractory material of the furnace wall can be suppressed. Incidentally, on the other hand, in the conventional procedure using an induction furnace, the external heating mode is employed where the raw material is heated by means of the heat transfer from a crucible, and therefore the crucible has to be maintained at a higher temperature than the molten body, which leads to a problem of severe erosion of the refractory material of the crucible.

The electric furnace may be a direct resistive heating furnace (electric resistance type melting furnace) that utilizes Joule heat (direct resistive heating). In this case, the tip of the electrode is immersed below the surface of the molten slag and an electric current is directly applied. This permits the electric current to flow through the molten slag, which heats the raw material causing the raw material to melt.

Alternatively, the electric furnace may be an arc furnace which heats an object (raw material) by means of the heat generation by the arc itself (arc heating). The arc furnace includes a furnace which utilizes direct arc heating (direct arc furnace), and a furnace which uses indirect arc heating (indirect arc furnace). In the direct arc furnace, an arc is generated between the electrode and the object to be heated, and an electric current is applied into the object, thereby heating the object. On the other hand, in the indirect arc furnace, an arc is generated between a plurality of electrodes, and the object is heated principally by means of radiated heat without the application of an electric current into the object.

The arc furnace may be either the direct arc furnace or the indirect arc furnace. Further, the arc furnace includes a direct current arc furnace (DC) and an alternating current arc furnace (AC arc furnace), and either of them may be used in this embodiment. The DC arc furnace utilizes an arc generated based on the direct current, whereas the AC arc furnace utilizes an arc generated based on the alternating current. In the AC arc furnace, three electrodes corresponding to three-phase alternating current are typically provided in an upper part of the furnace, and generate an arc between each electrode and the object to be heated, by means of the alternating current. The AC arc furnace utilizing the direct arc heating is also referred to as a three-phase furnace of the direct arc heating type.

In particular, the use of a submerged arc furnace, which will be described later in detail, allows for efficient heating with small input electric power.

On the other hand, the arc furnace does not include a furnace utilizing arc plasma heating (arc plasma furnace). The arc plasma heating refers to a way of heating where plasma generated by arc discharge is applied to an object to be heated, using a plasma torch or the like, and the plasma heats the object. In the arc plasma furnace, the arc is confined in the plasma torch. The heating of the object is performed by means of the plasma, but by means of the heat generation of the arc itself. In the arc plasma furnace, an ultrahigh temperature plasma is generated, and the lifetime of a refractory material of a furnace lid and an upper furnace wall may be shortened by the effect of the high temperature plasma. Further, during the operation of the furnace, an element having a higher vapor pressure than the atmospheric pressure at an atmospheric temperature (about 1,400°C) (Li, Zn, etc.) volatilizes, and the element tends to bring pollution to a gas exhaust system of the furnace; therefore, a separate process for recovering the element is required. Due to such a disadvantage, the way of heating excludes the arc plasma heating.

The electric furnace may be either the direct resistive heating furnace or the arc furnace, as described above, and the electrode is preferably arranged such that the electrode tip is not in contact with the alloy (molten alloy) localized in the lower layer. The slag (molten slag) principally containing an oxide has relatively high electric resistance. In contrast, the alloy (molten alloy) principally containing a metal has lower electric resistance. It is important to avoid excess immersion of the tip of the electrode since the contact of the tip of the electrode with the alloy may cause a short circuit. A procedure for adjusting the position of the electrode is not particularly limited. Examples thereof include a procedure that involves regulating an electric current value at a constant level, and a procedure that involves regulating a voltage at a constant level.

### (Electric Resistance Type Melting Furnace)

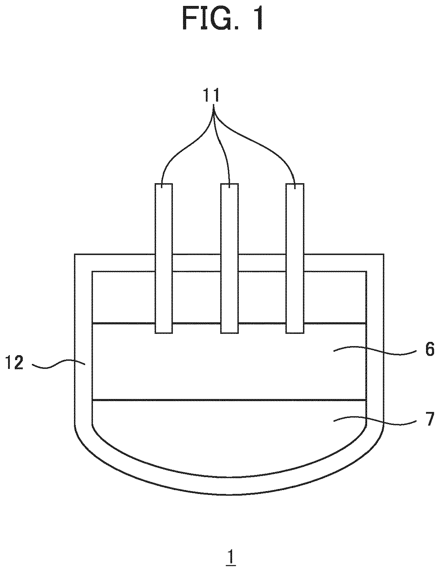

More specifically, FIG. 1 schematically shows a cross section of an electric resistance type melting furnace, with the raw material being melted and separated into a layer of slag 6 and a layer of alloy 7. In the electric resistance type melting furnace 1, an electric current flows from three graphite electrodes 11 to the slag 6, and the slag 6 generates heat. A portion close to the electrode 11 has a highest temperature, and a portion closer to a refractory material layer 12 has a lower temperature. The alloy 7 is heated by means of heat transfer from the slag 6 present over the alloy 7.

A graphite electrode can be used as the electrode of the electric resistance type melting furnace. In the studies made by the present inventors, even in the internal heating using the graphite electrode, the amount of carbon incorporated into the object to be heated (raw material) is very small. Therefore, strict control of the degree of oxidation and reduction is possible. Additionally, an electrode controller for adjusting the vertical position of the electrode may be provided, as needed. The electrode controller allows the gap between the surface of the object and the electrode tip to be maintained at a constant distance, by adjusting the vertical position of the electrode, even when the position of the surface of the raw material (or a molten body thereof) varies vertically during the operation of the furnace; this ensures stable generation of an arc.

The electric resistance type melting furnace preferably includes a furnace wall, and cooling means for cooling the furnace wall. Since the electric resistance type melting furnace utilizes internal heating by way of the electrode provided therein, cooling of the furnace wall is possible. Additionally, when the cooling means is provided on the furnace wall, the temperature of the furnace wall can be lowered and a coating of the slag can be formed on its surface. The coating has an effect of preventing further erosive wear of the furnace wall by the slag. Accordingly, the erosion of a refractory material of the furnace wall can be even further suppressed. In contrast, in the induction furnace utilizing the external heating, the raw material is heated by means of the heat transfer from the crucible, and the crucible cannot be cooled; therefore, the suppression of the erosive wear of the crucible is difficult.

Incidentally, bricks or castables containing a known oxide-based material such as magnesia and alumina may be used as a refractory material which forms the furnace wall of the electric resistance type melting furnace. Also, the cooling means is not particularly limited. Examples of the cooling means include shower cooling and jacket cooling. The shower cooling is a way of cooling where cooling is performed by running water downward on a sheet iron shell provided on the outer wall of the furnace. The jacket cooling is a way of cooling where cooling is performed by contacting a water tube with refractory materials located along the entire circumference of the furnace wall or in a portion of the furnace wall subjected to heavy thermal load.

### (Submerged Arc Furnace)

A submerged arc furnace may also be used in the melting treatment. The submerged arc furnace is a type of arc furnace. The arc furnace utilizes the heat generation of the arc itself, and can achieve local heating and rapid heating using an ultrahigh temperature and a high energy density. Among the arc furnaces, the direct arc furnace has an electrode provided above the object to be heated with a gap, and an arc is generated in the gap to heat the object; and the indirect arc furnace generates an arc between a plurality of electrodes, and the object is principally heated by means of radiated heat, as described above. On the other hand, the submerged arc furnace has a plurality of electrodes embedded (submerged) in the object to be heated, and utilizes heating due to the arc discharge as well as Joule heat (heat due to electric resistance). Specifically, arc discharge occurs between the electrode tip and the object, and this arc heats the object (slag). At the same time, an electric current flows between the electrodes (among one electrode, the object, and another electrode) through the object, and the object (slag) generates heat by means of Joule heat.

The submerged arc furnace is characterized by efficient heating with a small input power. In the direct arc furnace and the indirect arc furnace, arc discharge is generated above the object. This configuration causes the release of a considerable part of the generated heat into the atmosphere, and therefore a large loss of the energy, which is uneconomical. Further, dust is likely to be generated from the object due to the impact caused by the arc, which necessitate the provision of a dust treatment means. Furthermore, in the case where the electrode is close to the furnace wall, the refractory material of the furnace wall is susceptible to thermal damage, and the durability of the refractory material may be adversely affected. In contrast, the submerged arc furnace releases a minor amount of heat since the electrode thereof is covered with the object to be heated. In addition, the submerged arc furnace causes less dust generation and less thermal damage of the refractory material, and leads to a reduction of costs for the dust treatment and the replacement of the refractory materials. For these reasons, the use of submerged arc furnace renders the recovery of valuable metals highly efficient and inexpensive.

Especially when discarded lithium ion batteries are used in a charge as the raw material, the amount of slag generated is about 3 times as large as the amount of alloy generated in terms of volume ratio. It is important for maintaining the alloy under a molten state to ensure heat transfer to the alloy by way of the slag. The suppression of the erosive wear of the refractory material is also important since a lithium component contained in the discarded lithium ion battery forms the slag and has a great effect on the erosive wear of the refractory material at high temperatures. In this regard, the direct arc furnace and the indirect arc furnace require an increase in input power to melt the whole alloy, since merely the slag surface is locally heated by means of the arc discharge. In contrast, the submerged arc furnace utilizes not only the arc discharge but also the Joule heat, and effectively achieves the heat transfer to the alloy by way of the slag accordingly. Therefore, the submerged arc furnace allows for efficient heating even with a small input power. In addition, the submerged arc furnace provides a relatively uniform thermal distribution because of the embedment of the electrode tip in the slag, and allows for the suppression of the erosion of the refractory material.

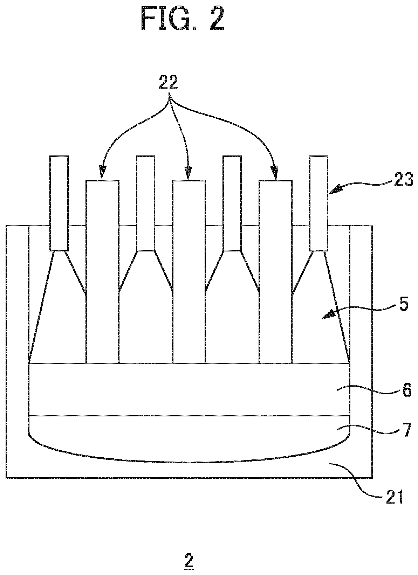

FIG. 2 is a diagram schematically showing a cross section of a submerged arc furnace. The submerged arc furnace 2 includes a furnace wall and hearth 21 made of a refractory material, electrodes 22, and feed ports (raw material feeding ports) 23.

In the submerged arc furnace 2, a raw material 5 is first charged via feed ports 23. Then, the tips of the electrode 22 are immersed below the surface of the charged raw material 5, and an electric current is applied to the electrodes 22. Then, the raw material 5 is melted by means of arc heating and Joule heat, and separated into a layer of a slag 6 and a layer of an alloy 7. Keeping the tips of the electrodes 22 being immersed in the slag 6 enables continuous heating of the slag 6. In addition, the alloy 7 located below the slag 6 is heated by means of the heat transfer from the slag 6.

In the heating and melting of the raw material, it is preferable to further charge an additional raw material over the slag and provide a covering layer including the additional raw material (open choke feed). Thereby, the heating and melting of the raw material is performed more efficiently. More specifically, when the raw material is heated and melted, a high temperature gas is generated, and the presence of the covering layer including the raw material on the top surface of the slag causes heat exchange between the high temperature gas and the raw material to occur, and therefore the generated heat can be effectively utilized for the melting of the raw material.

Further, in the heating and melting of the raw material, the immersion depth of the electrode is preferably adjusted according to the melting point of the generated alloy. For example, when the melting point of the alloy is very close to the melting point of the slag, or the melting point of the alloy is higher than the melting point of the slag, the alloy is difficult to maintain its molten state. In such a case, the electrode is immersed deeply inside the slag. This makes it easier to transfer the Joule heat generated at the electrode tip to the alloy, and hence, to maintain the molten state of the alloy. On the other hand, when the melting point of the alloy is lower than the melting point of the slag, the molten state of the alloy can be sufficiently maintained even at a shallow immersion depth of the electrode.

A graphite electrode may be used as the electrode of the submerged arc furnace. As described above, even in the internal heating using the graphite electrode, the amount of carbon incorporated into the object to be heated (raw material) is not so much, and causes no problem in controlling the degree of oxidation and reduction. In addition, by examining the amount of carbon incorporated into the object beforehand, it may be possible to use the carbon introduced from the electrode as a reductant. Thus, in adding a reductant such as carbon to adjust the degree of reduction, the amount of the reductant used can be reduced. Additionally, an electrode controller for adjusting the vertical position of the electrode may be provided, as needed. The electrode controller allows the interval between the surface of the object and the electrode tip to be maintained at a constant distance, by adjusting the vertical position of the electrode, even when the position of the surface of the raw material (or a molten body thereof) varies vertically during the operation of the furnace; this ensures stable heating.

The submerged arc furnace preferably includes a furnace wall, and cooling means for cooling the furnace wall. Since the submerged arc furnace utilizes internal heating by way of the electrode provided therein, cooling of the furnace wall is possible. Additionally, when the cooling means is provided on the furnace wall, the temperature of the furnace wall can be lowered and a coating of the slag can be formed on its surface. The coating has an effect of preventing further erosive wear of the furnace wall by the slag. Accordingly, the erosion of a refractory material of the furnace wall can be even further suppressed.

Incidentally, bricks or castables containing a known oxide-based material such as magnesia and alumina may be used as a refractory material which forms the furnace wall of the submerged arc furnace. Also, the cooling means is not particularly limited. Examples of the cooling means include shower cooling and jacket cooling.

### (Regarding Other Conditions of Melting Treatment, etc.)

In the melting treatment, a metal sheet may be laid on the surface of the raw material for the treatment. At the initial stage of the melting treatment, the raw material contains a little amount of alloy, and has relatively high electric resistance. In particular, the raw material obtained after the preliminary heating step described later is composed of oxides for the most part, and has high electric resistance. Therefore, the heating based on Joule heat and arc heating may be difficult to occur. In such a case, the raw material can be efficiently heated by overlaying a metal sheet having lower electric resistance on the surface of the raw material, and applying an electric current to the metal sheet.

In other words, the metal sheet generates heat upon the application of the electric current, followed by the conduction of the generated heat, and then the raw material is heated and melted. Once the melting proceeds to some extent, a molten slag is formed, and thus the metal sheet is not needed any more. The material of the metal sheet is not particularly limited so long as the metal sheet has such low electric resistance that the heating based on the Joule heat or the arc heating occurs. Examples of the metal sheet include sheets including aluminum and/or iron. Also, the thickness of the sheet is not particularly limited. For example, a sheet having a thickness of about 1.0 to 5.0 mm may be used. The metal sheet used is eventually incorporated into the slag or the alloy.

In the melting treatment, a reductant may be introduced (added) to the raw material. Carbon and/or carbon monoxide is preferably used as the reductant. Carbon has ability to easily reduce the valuable metal (for example, Cu, Ni, and Co), which is a target for the recovery. For example, 1 mole of carbon can reduce 2 moles of the oxides of the valuable metal (copper oxide, nickel oxide, etc.). Therefore, the introduction of an appropriate amount of carbon makes it possible to strictly adjust the degree of oxidation and reduction. Additionally, a reduction procedure using carbon or carbon monoxide is much safer than a procedure using a metallic reductant (for example, thermite reaction method using aluminum). Incidentally, artificial graphite and/or natural graphite may be used as carbon, and coal and coke may be used when they pose no risk of impurity contamination.

In the melting treatment, a flux may be introduced (added) to the raw material. When the flux is added, the temperature of the melting can be lowered, and the removal of phosphorus (P) can be even further enhanced. The flux preferably includes an element which takes up an impurity element and forms a basic oxide having a lower melting point. Phosphorus, which is an impurity element, forms an acidic oxide upon oxidation; thus, the more basic the slag formed through the melting treatment is, the easier the incorporation of phosphorus to the slag and the removal of phosphorus are. Among others, a flux containing a calcium compound, which is inexpensive and stable at ambient temperature, is more preferable. Examples of the calcium compound include calcium oxide (CaO) and calcium carbonate (CaCO₃).

The heating temperature in the melting treatment is not particularly limited, and is preferably 1,300°C or higher and 1,450°C or lower, and more preferably 1,350°C or higher and 1,400°C or lower. At a temperature higher than 1,450°C, the thermal energy is wastefully consumed, and the refractory material is consumed severely, which may result in a decrease in productivity. On the other hand, at a temperature lower than 1,300°C, the separability of the slag and the alloy may be impaired and a problem of a decrease in the recovery ratio of the valuable metal may be caused.

### [Preliminary Heating Step]

In the method according to the present embodiment, the step of preliminarily heating (oxidatively roasting) the raw material to obtain a preliminarily heated product (oxidatively roasted product) (preliminary heating step) may be included before the melting step, as needed. In the preliminary heating step, the raw material (charge, etc.) is preliminarily heated to reduce the amount of carbon contained in the raw material. Even in the case where the raw material contains an excess amount of carbon, the preliminary heating treatment enables the excess carbon to be oxidized and removed, thereby promoting the integration of the valuable metal into the alloy in a melting treatment in the subsequent melting step.

More specifically, the valuable metal is reduced to form localized molten fine particles upon the heating and melting of the raw material in the melting step. However, when the raw material contains an excess amount of carbon, the carbon may be a physical obstacle in the aggregation of the molten fine particles (valuable metal), and interfere with the aggregation and integration of the melting molten fine particles and the resulting separability of the alloy and the slag, leading to a decrease in the recovery ratio of the valuable metal. Further, since phosphorus (P) is an impurity element which is relatively easily reduced, the presence of an excess amount of carbon in the raw material may lead to the reduction of phosphorus and trapping of phosphorus in the molten alloy together with the valuable metal. In this regard, when the preliminary heating step is performed and the raw material is preliminarily heated to remove the excess amount of carbon beforehand, the aggregation and integration of the molten fine particles (valuable metal) in the melting treatment can proceed and the contamination of the alloy with phosphorus can be prevented, resulting in an even further increase in the recovery ratio of the valuable metal. In addition, the carbon amount of the preliminarily heated product is preferably less than 1% by mass.

In the preliminary heating treatment, it is preferable to perform the treatment to such a degree of oxidation that the low-value-added metal (Al, etc.) contained in the raw material can be oxidized. The degree of oxidation can be easily controlled by adjusting the temperature, time and/or atmosphere of the treatment in the preliminary heating. Thus, the degree of oxidation can be adjusted more strictly, and consequently, variations in oxidation can be suppressed.

The adjustment of the degree of oxidation is performed as follows. As described above, aluminum (Al), lithium (Li), carbon (C), manganese (Mn), phosphorus (P), iron (Fe), cobalt (Co), nickel (Ni) and copper (Cu) are generally oxidized in the order of: Al > Li > C > Mn > P > Fe > Co > Ni > Cu; as such, in the preliminary heating treatment, the oxidation is continued until the total amount of aluminum (Al) is oxidized. The oxidation may be promoted until a fraction of iron (Fe) is oxidized, but the degree of oxidation is kept to such an extent that the oxidation of cobalt (Co) and the distribution thereof to the slag is avoided.

The preliminary heating treatment may be performed in the presence of an oxidant. The preliminary heating in the presence of the oxidant makes it possible to efficiently achieve the oxidation and removal of carbon (C) as an impurity and the oxidation of aluminum (Al). The oxidant is not particularly limited, and an oxygen-containing gas (air, pure oxygen, oxygen-enriched gas, etc.) is preferable in light of its ease of handling. The amount of the oxidant introduced is preferably about 1.2 times the chemical equivalent required for the oxidation of each substance to be oxidatively treated, for example.

The heating temperature in the preliminary heating is preferably 700°C or higher and 1,100°C or lower. When the temperature in the preliminary heating is 700°C or higher, the efficiency of the oxidation of carbon can be even further increased, and the oxidation time can be reduced. Further, when the temperature in the preliminary heating is 1,100°C or lower, thermal energy costs can be limited, and the efficiency of the preliminary heating can be enhanced. Further, the temperature in the preliminary heating may be 800°C or higher. Moreover, the temperature in the preliminary heating may be 900°C or lower.

The preliminary heating treatment can be performed using any known heating furnace. Further, it is preferable to use a furnace (preliminary furnace) different from the melting furnace used in the melting treatment in the subsequent melting step, and perform the preliminary heating treatment in the preliminary furnace. A furnace of any design may be used as the preliminary furnace so long as the furnace permits the oxidant (oxygen, etc.) to be fed while heating (roasting) the charge and the oxidation treatment to be performed inside the furnace. Examples of such a furnace include a rotary kiln, and a tunnel kiln (hearth furnace), which are conventionally known.

### [Slag Separation Step]

In the slag separation step, the slag is separated from the alloy obtained in the melting step to recover the alloy. The slag and the alloy differ in specific gravity. Therefore, the slag having a lower specific gravity than the alloy accumulates over the alloy, and the alloy can be easily separated and recovered through the separation based on the specific gravity.

The slag separation step may be followed by the sulfurization step of sulfurizing the obtained alloy, and the crushing step of crushing the resulting sulfide or the alloy. Furthermore, the valuable-metal-containing alloy obtained after such a pyrometallurgy process may be subjected to a hydrometallurgy process. The hydrometallurgy process makes it possible to remove the impurity components, to separate and purify the valuable metal (for example, Cu, Ni, and Co), and to recover each valuable metal. Incidentally, examples of treatments in the hydrometallurgy process include known procedures such as a neutralization treatment and a solvent extraction treatment.

As described hereinabove in detail, according to the method of the present embodiment, the erosion of the refractory material can be significantly suppressed in the melting treatment, as compared with the case of using an induction furnace, by using an electric furnace equipped with an electrode therein as a melting furnace, and melting the charge by means of the Joule heat or the heat generation of the arc itself. Additionally, the use of a graphite electrode as an electrode causes no problem when the degree of oxidation and reduction is controlled accounting for an input from the electrode. Thus, the method according to the present embodiment allows for the recovery of the valuable metal at a high recovery ratio, and efficient removal of impurities such as phosphorus and manganese, resulting in the recovery of the valuable metal at a low cost and with high efficiency.

Here, the charge of the raw material applicable to the method according to the present embodiment is not particularly limited so long as the charge contains the valuable metal, as described above. The charge preferably contains a discarded lithium ion battery, among others. The discarded lithium ion battery contains lithium (Li) and a valuable metal (Cu, Ni, and Co), as well as a low-value-added metal (Al and Fe) and carbon components. Therefore, the use of the discarded lithium ion battery as the charge allows for efficient separation and recovery of the valuable metals.

It should be noted that the "discarded lithium ion battery" encompasses not only used lithium ion batteries but also waste materials in the production process of the lithium ion battery, e.g., defective products of components of the batteries, such as a positive electrode material and the like, which are generated in the production process, as well as residues and leavings inside the production process. The discarded lithium ion battery may be referred to as lithium ion battery waste material.

### <<2. Recovery Method of Valuable Metal from Discarded Lithium Ion Battery>>

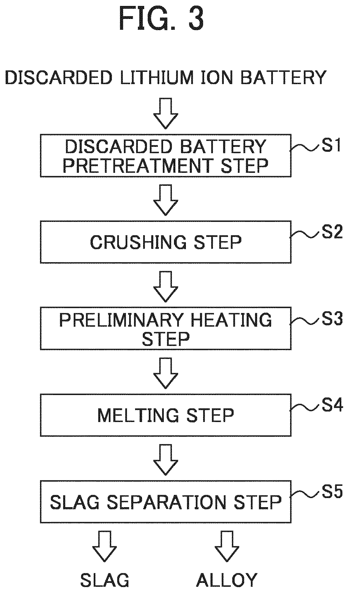

Next, a method for recovering a valuable metal from a discarded lithium ion battery will be described. FIG. 3 is a flowchart showing an example of a flow of the recovery.

As shown in FIG. 3, the recovery method of a valuable metal from a discarded lithium ion battery includes the steps of: removing an electrolyte solution and an outer case of the discarded lithium ion battery to obtain a discarded battery contents (discarded battery pretreatment step S1); crushing the discarded battery contents to obtain crushed product (crushing step S2); preliminarily heating the crushed product to obtain a preliminarily heated product (preliminary heating step S3); melting the preliminarily heated product to form an alloy and a slag (melting step S4); and separating the slag and recovering the alloy containing the valuable metal (slag separation step S5).

In addition, the slag separation step S5 may be followed by the sulfurization step of sulfurizing the obtained alloy, and the crushing step of crushing the resulting sulfide or the alloy, although not shown in FIG. 3. In the following, each step will be described in detail.

### (Discarded Battery Pretreatment Step)

The discarded battery pretreatment step (S1) is performed for the purpose of the explosion prevention and detoxification of the discarded lithium ion battery and the removal of the outer case. The lithium ion battery is produced in the form of a closed system, and contains the electrolyte solution and the like therein. Thus, a direct crushing treatment of the lithium ion battery is dangerous because of a risk of explosion, and it is preferable to apply an electric discharge treatment and/or an electrolyte solution removal treatment to the lithium ion battery via any procedure. On the other hand, the outer case is often formed from aluminum (Al) or iron (Fe), which are metals, and such an outer case made from a metal is relatively easy to recover directly. Thus, the removal of the electrolyte solution and the outer case in the discarded battery pretreatment step (S1) leads to an increase in safety, and an increase in the recovery ratio of the valuable metal (Cu, Ni, and Co).

A specific method for the discarded battery pretreatment is not particularly limited. One exemplary procedure involves physically making a hole on the discarded battery with a needle-shaped cutting edge, and removing the electrolyte solution therethrough. An alternative procedure involves heating the discarded lithium ion battery and burning the electrolyte solution to achieve the detoxification.

In the case where aluminum (Al) and/or iron (Fe) contained in the outer case is recovered in the discarded battery pretreatment step (S1), the discarded lithium ion battery may be crushed followed by sieving the crushed product with a sieve shaker. Since aluminum (Al) is readily crushed to a powder form by mild crushing, aluminum (Al) can be efficiently recovered. Iron (Fe) contained in the outer case may be recovered through magnetic selection.

### (Crushing Step)

In the crushing step S2, the discarded lithium ion battery contents are crushed to obtain a crushed product. The treatment in the crushing step S2 is intended to enhance the reaction efficiency in a pyrometallurgy process. The enhancement of the reaction efficiency leads to an increase in the recovery ratio of the valuable metal (Cu, Ni, and Co). A specific crushing method is not particularly limited, and any conventionally known crusher such as a cutter mixer may be used for the crushing.

Incidentally, the discarded battery pretreatment step S1 and the crushing step S2, as described above, together correspond to the preparation step described above.

### (Preliminary Heating Step)

In the preliminary heating step (oxidative roasting step) S3, the crushed product obtained after the crushing step S2 is subjected to preliminary heating (oxidative roasting) to obtain a preliminarily heated product (oxidatively roasted product). Details of this step are as described above.

### (Melting Step)

In the melting step S4, the preliminarily heated product obtained in the preliminary heating step S3 is heated and melted to form an alloy and a slag. Details of this step are as described above. Specifically, in the heating and melting of the raw material, an electric furnace equipped with an electrode therein is used as a melting furnace, and the raw material is charged into a furnace of the electric furnace. In addition, this step is characterized in that the raw material is melted by means of Joule heat generated by applying an electric current to the electrode or the heat generation of the arc itself.

### (Slag Separation Step)

In the slag separation step S5, the slag obtained in the melting step S4 is separated, and an alloy is recovered. Details of this step are as described above.

Incidentally, the slag separation step may be followed by a sulfurization step and a crushing step. Furthermore, the obtained alloy containing the valuable metal may be subjected to a hydrometallurgy process. Details of the sulfurization step, the crushing step and the hydrometallurgy process are as described above.

### EXAMPLES

In the following, the present invention will be described in more detail with reference to Examples of the present invention, but the present invention is not limited in any way to the following Examples.

### (1) Recovery of Valuable Metals

### [Example 1]

Valuable metals were recovered using a discarded lithium ion battery as a charge. In this recovery, the heating and melting of the raw material was performed using an electric furnace equipped with electrodes therein (electric resistance type melting furnace).

### <Discarded Battery Pretreatment Step, and Crushing Step (Preparation Step)>

A discarded lithium ion battery was detoxified, and then an outer case was removed. The remaining part was coarsely crushed to a size of 5 mm or less using a crusher, and the crushed material was heated and melted to obtain a raw material for the recovery of the valuable metals.

### <Preliminary Heating Step>

The obtained raw material was preliminarily heated (oxidatively roasted) at 800°C prior to heating and melting the raw material, to remove carbon. Thus, a preliminarily heated product (oxidatively roasted product) was obtained. The carbon content of the preliminarily heated product was less than 1% by mass.

### <Melting Step>

Graphite powder as a reductant and further calcium oxide (CaO) as a flux were added to 50 kg of the obtained preliminarily heated product. The amount of the reductant added was adjusted so as to be appropriate for reducing copper (Cu), nickel (Ni) and cobalt (Co) in the preliminarily heated product. The amount of the flux added was adjusted so as to achieve the formation of a eutectic mixture of calcium oxide and alumina and a decrease in the melting point of a slag.

Then, the raw material (a mixture of the preliminarily heated product, the reductant, and the flux) was charged into an electric resistance type melting furnace as shown in FIG. 1, and heated and melted. A slag and an alloy were thus obtained. The electric resistance type melting furnace used had a furnace chamber a sidewall (furnace wall) of which was built up with thermal insulation bricks, and the inner diameter of the melting furnace was 600 mm. In addition, the furnace chamber sidewall was lined with a dense magnesia caster having a thickness of 20 mm. Furthermore, the electric furnace had three graphite electrodes therein, and the rated output was 100 kVA, and the maximum voltage was 480 V.

Furthermore, the furnace wall of the electric resistance type melting furnace was provided with cooling means including a jacket made from copper. Moreover, in the heating and melting, a sheet made from iron and having a thickness of 5 mm was laid on the surface of the raw material. Furthermore, the electrodes were arranged such that the tips of the graphite electrodes were not in contact with the alloy in a molten state (molten alloy).

### <Slag Separation Step>

The slag was separated after the melting step to recover the alloy. This was designated as a recovered alloy.

### [Example 2]

Valuable metals were recovered using a discarded lithium ion battery as a charge. In this recovery, the heating and melting of the raw material was performed using a submerged arc furnace equipped with electrodes therein.

### <Discarded Battery Pretreatment Step, and Crushing Step (Preparation Step)>

A discarded lithium ion battery was detoxified, and then an outer case was removed. The remaining part was coarsely crushed to a size of 5 mm or less using a crusher, and the crushed material was heated and melted to obtain a raw material for the recovery of the valuable metals.

### <Preliminary Heating Step>

The obtained raw material was preliminarily heated (oxidatively roasted) at 800°C prior to heating and melting the raw material, to remove carbon. Thus, a preliminarily heated product (oxidatively roasted product) was obtained. The carbon content of the preliminarily heated product was less than 1% by mass.

### <Melting Step>

Graphite powder as a reductant and further calcium oxide (CaO) as a flux were added to 50 kg of the obtained preliminarily heated product. The amount of the reductant added was adjusted so as to be appropriate for reducing copper (Cu), nickel (Ni) and cobalt (Co) in the preliminarily heated product. The amount of the flux added was adjusted so as to achieve the formation of a eutectic mixture of calcium oxide and alumina and a decrease in the melting point of a slag.

Then, the raw material (a mixture of the preliminarily heated product, the reductant, and the flux) was charged into a submerged arc furnace as shown in FIG. 2, and heated and melted. A slag and an alloy were thus obtained. The submerged arc furnace used had a furnace chamber a sidewall (furnace wall) of which was built up with thermal insulation bricks, and the inner diameter of the melting furnace was 600 mm. In addition, the furnace chamber sidewall was lined with a dense magnesia caster having a thickness of 20 mm. Furthermore, the submerged arc furnace had three graphite electrodes therein, and the rated output was 100 kVA, and the maximum voltage was 480 V.

Furthermore, the furnace wall of the submerged arc furnace was provided with cooling means including a jacket made from copper. Moreover, the electrodes were arranged such that the tips of the graphite electrodes were not in contact with the alloy in a molten state (molten alloy).

### <Slag Separation Step>

The slag was separated after the melting step to recover the alloy. This was designated as a recovered alloy.

### [Comparative Example 1]

The heating and melting of the raw material were performed using an induction furnace. Valuable metals were recovered in otherwise the same manner as in Example.

The induction furnace used was provided with a refractory cement layer (thickness: about 90 mm) inside the cooling coil (diameter: about 700 mm). In the heating and melting, a graphite crucible (wall thickness: about 60 mm), which functioned as a heat generator was charged on the inner side of the refractory cement layer. The inner side of this graphite crucible was lined with a dense magnesia caster having a wall thickness of 20 mm, and the caster covered the heat generator.

### (2) Evaluation

For Examples 1 and 2 and Comparative Example, the evaluation of various properties was performed as shown below.

### <Component Analysis>

The preliminarily heated product, as well as the alloy and the slag after cooling were crushed, and component analysis thereof was performed using X-ray fluorescence. Then, the distribution ratio of each element to the alloy and the slag was calculated based on the content of each element.

### <Amount of Refractory Material Erosion>

The amount of the erosion of the refractory material of the furnaces used in the treatment in the melting step was visually evaluated.

### (3) Results

The composition of the preliminarily heated products obtained in Examples 1 and 2 and Comparative Example is shown in Table 1 below. The preliminarily heated products principally contained copper (Cu), nickel (Ni), cobalt (Co), aluminum (Al), lithium (Li), iron (Fe) and manganese (Mn), and additionally contained a trace amount of phosphorus (P) and silicon (Si). Incidentally, the composition in Table 1 is expressed as values in % by mass.

**[Table 1]**

| Composition of raw material (% by mass) | | | | | | | | |
|---|---|---|---|---|---|---|---|---|
| Cu | Ni | Co | Al | Li | Fe | P | Mn | Si |
| 30.7 | 16.9 | 4.0 | 10.4 | 3.0 | 2.3 | 0.5 | 3.0 | 0.5 |

The distribution ratio of each element to the alloy and the slag in Examples 1 and 2 is shown in Table 2 below. As shown in Table 2, the valuable metals, i.e., copper (Cu), nickel (Ni) and cobalt (Co), were distributed to the alloy (metal) in a high distribution ratio. In contrast, manganese (Mn), phosphorus (P), aluminum (Al), lithium (Li), silicon (Si) and calcium (Ca) were for the most part distributed to the slag. This confirmed that the recovery ratios of copper (Cu), nickel (Ni) and cobalt (Co) were all high, and that components desired to be removed, such as manganese (Mn) and phosphorus (P), could be for the most part removed from the target for the recovery, i.e., the alloy.

**[Table 2]**

| | Distribution ratio (%) | | | | | | | | | | |
|---|---|---|---|---|---|---|---|---|---|---|---|
| | Element | Cu | Ni | Co | Fe | Mn | P | Al | Li | Si | Ca |
| Example 1 | Metal | 100 | 100 | 97 | 75 | 1 | 0 | 0 | 0 | 0 | 0 |
| | Slag | 0 | 0 | 3 | 25 | 99 | 100 | 100 | 100 | 100 | 100 |
| Example 2 | Metal | 100 | 100 | 97 | 75 | 1 | 0 | 0 | 0 | 0 | 0 |
| | Slag | 0 | 0 | 3 | 25 | 99 | 100 | 100 | 100 | 100 | 100 |

The content of phosphorus (P) in the alloy, the distribution ratio of cobalt (Co) to the alloy, and the amount of the erosion of the refractory material in Examples 1 and 2 and Comparative Example are shown in Table 3 below. As shown in Table 3, favorable results were obtained for both of the electric furnaces used in Examples 1 and 2 and the induction furnace used in Comparative Example. More specifically, the recovery ratio of cobalt (Co) was as high as 97%, and the amount of phosphorus (P) in the alloy was less than 0.001% by mass.

On the other hand, the erosion of the refractory material, i.e., magnesia was 4 mm for the induction furnace used in Comparative Example, whereas the erosion of the magnesia was less than 1 mm for the electric furnace used in Example 1, and further, the erosion of the magnesia was less than 0.8 mm for the submerged arc furnace used in Example 2; this confirmed that the erosion in Examples 1 and 2 was very slight. This demonstrated that the electric furnaces gave favorable results.

**[Table 3]**

| | Type of furnace | Refractory material | Adjustment of degree of reduction | Erosion of refractory material |
|---|---|---|---|---|
| Example 1 | Electric furnace | Magnesia | In metal P<0.001% | < 1 mm erosion |
| | (Three electrodes) | | Metal Co Distribution ratio:97.0% | |
| Example 2 | Submerged arc furnace | Magnesia | In metal P<0.001% | < 0.8 mm erosion |
| | (Three electrodes) | | Metal Co Distribution ratio:97.1% | |
| Comparative Example 1 | Induction furnace | Magnesia | In metal P<0.001% | 4 mm erosion |
| | (Double crucible, outer: Graphite) | | Metal Co Distribution ratio:97.2% | |

### EXPLANATION OF REFERENCE NUMERALS

- 1: electric resistance type melting furnace
- 11: (graphite) electrode
- 12: refractory material layer
- 2: submerged arc furnace
- 21: hearth
- 22: (graphite) electrode
- 23: feed port
- 5: raw material
- 6: slag
- 7: alloy (metal)

## Claims

1. A method for recovering a valuable metal, comprising the steps of:
preparing a charge comprising at least a valuable metal as a raw material;
heating and melting the raw material to form an alloy and a slag; and
separating the slag to recover the alloy comprising the valuable metal,
wherein the heating and melting of the raw material comprises charging the raw material into a furnace of an electric furnace equipped with an electrode therein, and further, melting the raw material by means of Joule heat generated by applying an electric current to the electrode, or heat generation of an arc itself, and thereby separating the raw material into a molten alloy and a molten slag present over the alloy.

2. The method according to claim 1, wherein the electric furnace comprises a furnace wall, and cooling means for cooling the furnace wall.

3. The method according to claim 1 or 2, wherein the electrode is arranged such that in the heating and melting of the raw material, a tip of the electrode is not in contact with the alloy formed.

4. The method according to any one of claims 1 to 3, wherein the heating and melting of the raw material comprises overlaying a metal sheet on a surface of the raw material.

5. The method according to claim 1, wherein the electric furnace is a submerged arc furnace, and
wherein the heating and melting of the raw material comprises applying the electric current to the electrode to melt the raw material, with a tip of the electrode being immersed in the slag formed.

6. The method according to claim 5, wherein the heating and melting of the raw material comprises further charging an additional raw material over the slag formed to form a covering layer comprising the additional raw material.

7. The method according to claim 5 or 6, wherein an immersion depth of the electrode into the slag is adjusted according to a melting point of the alloy.

8. The method according to any one of claims 5 to 7, wherein the electrode is a graphite electrode.

9. The method according to any one of claims 5 to 8, wherein the submerged arc furnace comprises a furnace wall, and cooling means for cooling the furnace wall.

10. The method according to any one of claims 1 to 9, wherein the heating and melting of the raw material comprises introducing a reductant to the raw material.

11. The method according to any one of claims 1 to 10, wherein the heating and melting of the raw material comprises introducing a flux to the raw material.

12. The method according to any one of claims 1 to 11, further comprising preliminarily heating the raw material to decrease an amount of carbon contained in the raw material before heating and melting the raw material.

13. The method according to any one of claims 1 to 12, wherein the valuable metal comprises at least one metal selected from the group consisting of copper (Cu), nickel (Ni), cobalt (Co) and a combination thereof, or an alloy comprising at least one metal selected from the group consisting of copper (Cu), nickel (Ni), cobalt (Co) and a combination thereof.

14. The method according to any one of claims 1 to 13, wherein the charge comprises a discarded lithium ion battery.
